# EUROPÄISCHE PATENTSCHRIFT

(11) **EP 2 756 033 B1**
(45) Veröffentlichungstag und Bekanntmachung des Hinweises auf die Patenterteilung: **24.06.2015**
(21) Anmeldenummer: 12753133.3
(22) Anmeldetag: 31.08.2012
(51) Int. Cl.: C08K 3/00, C08L 77/00, C08K 3/02, C08K 3/08, C08K 3/22

(54) **SILBER-ZINKOXID-MISCHUNGEN ALS STABILISATOR FÜR FLAMMGESCHÜTZTE POLYAMIDE ENTHALTEND ROTEN PHOSPHOR**
SILVER/ZINC-OXIDE MIXTURES AS STABILIZERS FOR FLAME-RETARDANT POLYAMIDES CONTAINING RED PHOSPHORUS
MÉLANGES D'ARGENT ET D'OXYDE DE ZINC EN TANT QUE STABILISANT POUR DES POLYAMIDES IGNIFUGÉS CONTENANT DU PHOSPHORE ROUGE

(30) Priorität: 15.09.2011 EP 11181349
(43) Veröffentlichungstag der Anmeldung: 23.07.2014
(73) Patentinhaber: BASF SE, 67056 Ludwigshafen (DE)
(72) Erfinder: ROTH, Michael, 64686 Lautertal (DE); WEIß, Thomas, 68549 Ilvesheim (DE); MENOZZI, Edoardo, CH-4056 Basel (CH)
(86) Internationale Anmeldenummer: PCT/EP2012/066935
(87) Internationale Veröffentlichungsnummer: WO 2013/037647

(56) Entgegenhaltungen:
- EP-A1- 1 741 754
- EP-A2- 0 128 341
- EP-A2- 0 195 301
- WO-A2-2011/023584
- DE-A1- 2 308 104
- US-A- 5 466 741

## Beschreibung

Die Erfindung betrifft thermoplastische Formmassen, enthaltend
A) 10 bis 99,8 Gew.-% eines thermoplastischen Polyamids,
B) 0,1 bis 60 Gew.-% roter Phosphor,
C) 0,05 bis 20 Gew.-% einer Stabilisatormischung C) aufgebaut aus, bezogen auf 100 % C),
   C₁) 10,1 bis 99,9 Gew.-% elementares Ag und
   C₂) 0,1 bis 89,9 Gew.-% ZnO,
D) 0 bis 40 Gew.-% eines Schlagzähmodifiers,
E) 0 bis 60 Gew.-% weiterer Zusatzstoffe,
wobei die Summe der Gewichtsprozente A) bis E) 100 % ergibt.

Außerdem betrifft die vorliegende Erfindung die Verwendung derartiger Formmassen zur Herstellung von Fasern, Folien und Formkörpern und die hierbei erhältlichen Formkörper, Fasern und Folien jeglicher Art.

Es ist bekannt, dass der Zusatz von rotem Phosphor zu thermoplastischen Kunststoffen, vor allem zu verstärkten oder gefüllten Polyamiden, zu einem wirksamen Brandschutz führt (DE-A-1931387). Roter Phosphor neigt jedoch unter ungünstigen Bedingungen, wie z.B. erhöhter Temperatur, Feuchtigkeit, Gegenwart von Alkali oder Sauerstoff, zur Bildung von Zersetzungsprodukten, wie Phosphorwasserstoff und Säuren des 1- bis 5-wertigen Phosphors. In thermoplastischen Kunststoffen z.B. in Polyamide, eingearbeiteter roter Phosphor ist zwar infolge der Einbettung in das Polymere gegen Thermooxidation weitgehend geschützt, es kann jedoch auch hier längerfristig zur Bildung von Zersetzungsprodukten kommen. Dies ist insofern von Nachteil, da bei unsachgemäßer Verarbeitung von Granulaten im Spritzgußverfahren das sich bildende Phosphin zu Geruchsbelästigungen führen kann und zudem toxisch ist. Die gleichzeitig entstehenden Säuren des Phosphors können sich an der Oberfläche von Formteilen ausscheiden, wodurch vor allem die Kriechstromfestigkeit der Formteile herabgesetzt wird. Es hat daher nicht an Versuchen gefehlt, die Stabilität des als Flammschutzmittel für Kunststoffe eingesetzten roten Phosphors zu verbessern. So kann eine stabilisierende Wirkung durch Zugabe von Oxiden oder Hydroxiden des Zinks, Magnesiums oder Kupfers erreicht werden. Gemäß der DE-A-2625691 werden zusätzlich zu dieser Stabilisierung durch Metalloxide die Phosphorpartikel mit einem Polymerisat umhüllt. Dieses Umhüllungs- oder Verkapselungsverfahren ist jedoch recht aufwendig, außerdem ist die stabilisierende Wirkung des Systems nicht in allen Fällen befriedigend.

Aus der WO 2011/023584 sind Silber-Zinkoxid-Mischungen bekannt, welche als Antifouling-Zusatz für Polysulfonmembranen eingesetzt werden.

Der vorliegenden Erfindung lag daher die Aufgabe zugrunde, thermoplastische Formmassen zur Verfügung zu stellen, die einen wirksam stabilisierten roten Phosphor als Flammschutzmittel enthalten, d.h. eine geringere Phosphorsäureausscheidung sowie Phosphinbildung aufweisen. Die Stabilisatoren sollen sich außerdem durch gute Beständigkeit während der Verarbeitung und durch eine besonders homogene Verteilbarkeit in der Kunststoffschmelze auszeichnen.

Demgemäß wurden die eingangs definierten Formmassen gefunden. Bevorzugte Ausführungsformen können den Unteransprüchen entnommen werden.

Als Komponente A) enthalten die erfindungsgemäßen Formmassen 10 bis 99,8, vorzugsweise 20 bis 98 und insbesondere 30 bis 90 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®}C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

### AA/BB-Polymere

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-nonanediamin, Terephthalsäure
- PA MXD6: m-Xylylendiamin, Adipinsäure

### AA/BB-Polymere

- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 61 und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Bevorzugtes Flammschutzmittel B) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure (insbesondere Dioctylphthalat, s. EP 176 836) oder Adipinsäure oder mit polymeren oder oligomeren Verbindungen, z.B. mit Phenolharzen oder Aminoplasten sowie Polyurethanen beschichtet ist (s. EP-A 384 232, DE-A 196 48 503). Derartige sogenannte Phlegmatisierungsmittel sind in der Regel in Mengen von 0,05 bis 5 Gew.-%, bezogen auf 100 Gew.-% B) enthalten.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren -falls kein Polyamid als Thermoplast eingesetzt wird- nicht mehr als 35 Gew.-% bezogen auf das Gewicht der Komponenten A) und B) in der erfindungsgemäßen Formmassen betragen.

Bevorzugte Konzentratzusammensetzungen sind
B₁) 30 bis 90 Gew.-%, vorzugsweise von 45 bis 70 Gew.-% eines Polyamids oder Elastomeren,
B₂) 10 bis 70 Gew.-%, vorzugsweise von 30 bis 55 Gew.-% roter Phosphor.

Das eingesetzte Polyamid für den Batch kann verschieden von A) sein oder bevorzugt gleich A) sein, damit Unverträglichkeiten oder Schmelzpunktdifferenzen keine negative Auswirkung auf die Formmasse aufweisen.

Die mittlere Teilchengröße (d₅₀) der in den Formmassen verteilten Phosphorpartikel liegt bevorzugt im Bereich von 0,0001 bis 0,5 mm; insbesondere von 0,001 bis 0,2 mm.

Der Gehalt der Komponente B) in den erfindungsgemäßen Formmassen beträgt 0,1 bis 60, bevorzugt 0,5 bis 40 und insbesondere 1 bis 15 Gew.-%, bezogen auf die Summe der Komponenten A) bis E).

Als Komponente C) enthalten die erfindungsgemäßen Formmassen 0,05 bis 20, vorzugsweise 0,05 bis 5 und insbesondere 0,1 bis 2 Gew.-% einer Stabilisatormischung C) aufgebaut aus, bezogen auf 100 Gew.-%,
C₁) 10,1 bis 99,9 Gew.-% elementares Ag und
C₂) 0,1 bis 89,9 Gew.-% ZnO.

Bevorzugte Mischungen C) enthalten
C₁) 20,1 bis 99,9 Gew.-%, insbesondere 20,1 bis 40 Gew.-% elementares Silber und
C₂) 79,9 bis 0,1 Gew.-%, insbesondere 79,9 bis 60 Gew.-% ZnO.

Bei den bevorzugten Mischungen sollte -bedingt durch den Herstellungsprozeß (wie nachfolgend beschrieben)- die Summe C₁) und C₂) mindestens 90 %, vorzugsweise mindestens 95 % und insbesondere mindestens 100 % der Mischung ausmachen.

Die restlichen Bestandteile der Mischungen C) können aus z.B. nicht umgesetzten Carbonaten oder Oxiden bestehen.

Die primäre Partikelgröße des feinteiligen elementaren Silbers C₁) beträgt vorzugsweise 10 bis 200 nm, insbesondere 10 bis 100 nm, ganz besonders bevorzugt 30 bis 80 nm.

Die primäre Partikelgröße des feinteiligen ZnO C₂) beträgt vorzugsweise 0,1 bis 50 µm, insbesondere 0,1 bis 22 µm und ganz besonders bevorzugt 1 bis 22 µm.

Die bevorzugte Partikelgrößenverteilung von C) beträgt 1 bis 30 µm, insbesondere 1 bis 22 µm.

Die spezifische Oberfläche, d.h. BET-Oberfläche der Mischung C) beträgt vorzugsweise 10 bis 80 m²/g, insbesondere 15 bis 45 m²/g.

Erfindungsgemäß werden die o.g. Parameter wie primäre Partikelgröße gemäß SEM (Scanning Electron Microscope) bestimmt. Setzt man eine kombinierte Methode aus sog. EXD (Energy Dispersive X-ray Spectroscopy) ein, können zusätzliche Informationen bezüglich der elementaren Zusammensetzung der Primärpartikel (nm-Scala) erhalten werden.

Weiterhin kann die Partikelgrößenverteilung mittels Laser Granulometrie (laser diffraction method) bestimmt werden. Bevorzugte Meßmethode: Dispersion in Wasser unter Zugabe von Acrylat-basierten Dispergiermitteln und Behandlung der Dispersion mit Ultraschall.

Die BET-Oberfläche wird in der Regel gemäß ISO 9277 bestimmt (unter Stickstoff).

Die erfindungsgemäße Mischung C) kann erhalten werden, indem man
i) eine 1. Mischung aus mindestens einem Silbersalz mit einer 2. Mischung aus mindestens einem Zn-Salz vermischt und somit eine 3. Mischung aus Zn + Ag Salzen erhält,
ii) diese 3. Mischung mit einer Carbonatquelle versetzt,
iii) die entstehenden Ag und Zn Carbonate gemeinsam ausfällt und
iv) anschließend wäscht sowie
v) die Ag- und Zn-Carbonate gemeinsam thermisch zersetzt.

Weitere Einzelheiten wie einsetzbare Ag- und Zn-Salze, sowie Carbonatquellen, Herstellbedingungen wie Lösungsmittel, Temperatur etc. sind der WO 2011/023584 zu entnehmen, auf welche ausdrücklich hier Bezug genommen wird.

Als Komponente D) enthalten die Formmassen in Mengen 0 bis 40, bevorzugt 1 bis 30, insbesondere 2 bis 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopen-tadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

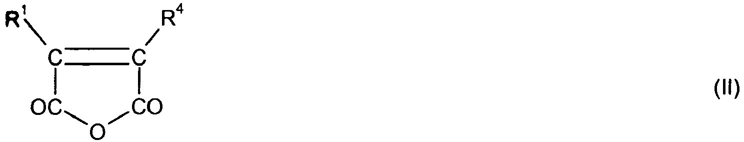

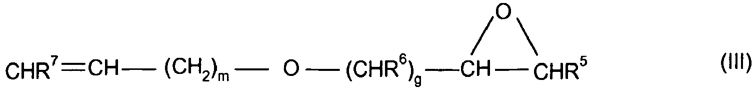

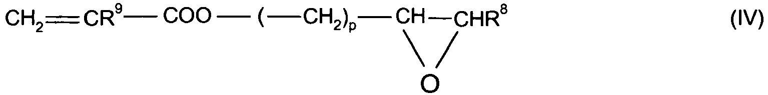

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidyl-methacrylat, (Meth)acrylsäure und/oder Maleinsäureanhydrid, und |
| 1 bis 45, | insbesondere 5 bis 40 Gew.-% n-Butylacrylat und/oder 2-Ethylhexyl-acrylat. |

Weitere bevorzugte Ester der Acryl- und/oder Methacrylsäure sind die Methyl-, Ethyl-, Propyl-und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 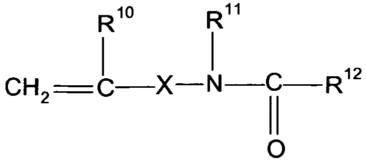 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 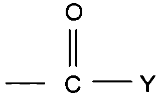
- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvemetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.
Beispiele für solche pfropfvemetzende Monomere sind Allylgruppen enthaltende Monomere, insbesondere Allylester von ethylenisch ungesättigten Carbonsäuren wie Allyl-acrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien. Isopren, n-Butylacrylat, Ethylhexylacrylat oder deren Mischungen | Styrol, Acrylnitril, Methylmethacrylat |
| II | wie I aber unter Mitverwendung von Vernetzem | wie I |
| III | wie I oder II | n-Butylacrylat, Ethylacrylat, Methylacrylat, Buta-1,3-dien, Isopren, Ethylhexyl-acrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Besonders bevorzugte Kautschuke D) sind Ethylencopolymere, wie vorstehend beschrieben, welche funktionelle Monomere enthalten, wobei die funktionellen Monomeren ausgewählt sind aus der Gruppe der Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen.

Der Anteil der funktionellen Gruppen beträgt 0,1 bis 20, vorzugsweise 0,2 bis 10 und insbesondere 0,3 bis 3,5 Gew.-%, bezogen auf 100 Gew.-% D).

Besonders bevorzugte Monomere sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppenenthaltenden Monomeren werden vorzugsweise durch Zugabe von Verbindungen der allgemeinen Formeln I - IV zum Monomerengemisch in die Olefinpolymerisate eingebaut.

Der Schmelzindex der Ethylencopolymeren liegt im allgemeinen im Bereich von 1 bis 80 g/10 min (gemessen bei 190°C und 2,16 kg Belastung).

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Bevorzugt eingesetzte Handelsprodukte B sind Exxelor^{®} VA 1801 oder 1803, Kraton^{®} G 1901 FX oder Fusabond^{®} N NM493 D oder Fusabond^{®} A560 der Firmen Exxon, Kraton und DuPont sowie Tafmer^{®}MH 7010 der Firma Mitsui.

Selbstverständlich können auch Mischungen der vorstehend aufgeführten Kautschuktypen eingesetzt werden.

Als Komponente E) können die erfindungsgemäßen Formmassen bis zu 60, vorzugsweise bis zu 50 Gew.-% weiterer Zusatzstoffe enthalten.

Als faser- oder teilchenförmige Füllstoffe E) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:

X NH₂-,

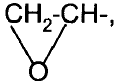

HO-,

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4 oder eines sterisch gehinderten Phenols oder deren Mischungen enthalten.

Als Salze des einwertigen Kupfers kommen vorzugsweise Kupfer(I)-Acetat, Kupfer(I)-Chlorid,-Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole E) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 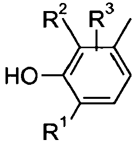 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 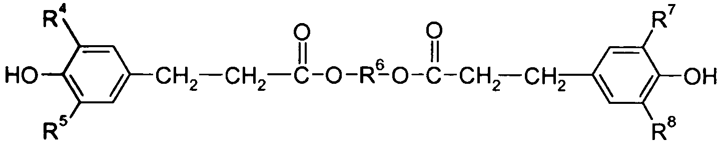 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.
Bevorzugte Verbindungen, die dieser Formel entsprechen, sind

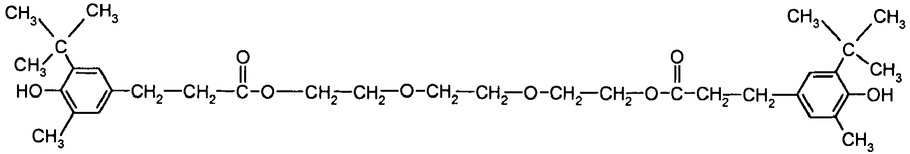

### (Irganox® 245 der Firma BASF SE)

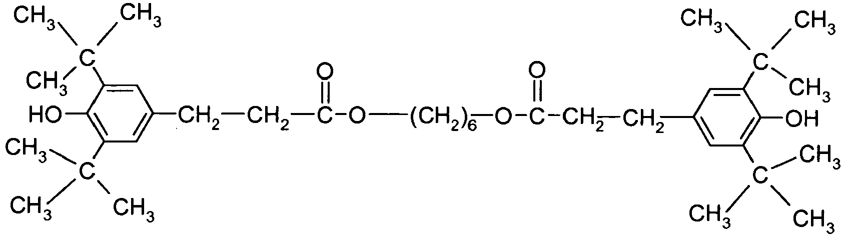

### (Irganox® 259 der Firma BASF SE)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phospha-bicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydro-cinnamid (Irganox® 1098) und das vorstehend beschriebene Irganox® 245 der Firma BASF SE, das besonders gut geeignet ist.

Die Antioxidantien E), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente E) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente E) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) und C) sowie gegebenenfalls D) und E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Flammwidrigkeit und eine hervorragende Phosphorstabilität aus. Diese eignen sich daher zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informations-technologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten- und Freizeitbereich möglich.

### Beispiele

Es wurden folgende Komponenten verwendet:
Komponente A:
   Polyamid 66 mit einer Viskositätszahl VZ von 150 mL/g, gemessen als 0.5 gew.-%ige Lösung in 96 gew.-%iger Schwefelsäure bei 25°C nach ISO 307 (Es wurde Ultramid A27 der BASF SE verwendet).
Komponente B:
   50%iges Konzentrat aus rotem Phosphor der mittleren Teilchengröße (d₅₀) von 10 bis 30 µm in einem Olefinpolymerisat aus: 59,8 Gew.% Ethylen, 35 Gew.% n-Butylacrylat, 4,5 Gew.% Acrylsäure und 0,7 Gew.% Maleinsäureanhydrid (Komponente D) mit einem Schmelzindex MFI (190/2.16) von 10 g/10min. Das Copolymerisat wurde durch Copolymerisation der Monomeren bei erhöhter Temperatur und erhöhtem Druck hergestellt.
Komponente C/1 handelsübliches Zinkoxid (zum Vergleich).
Komponente C/2 erfindungsgemäße Silber-Zinkoxid-Mischung (erhältlich gemäß WO 2011/023584):
Komponente C/2 wurde durch Co-Fällung der Carbonate und anschließendem Erhitzen im Muffelofen hergestellt:

   Zn(NO₃)₂ + K₂CO₃ → ZnCO₃ + 2 KNO₃

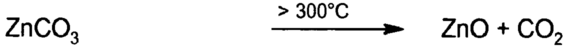

   2 AgNO₃ + K₂CO₃ → Ag₂CO₃ + 2 KNO₃

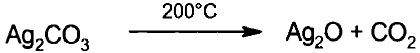

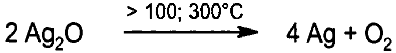

Zinknitrat (59.5 g; 0.20 mol) und Silbernitrat (6.4 g; 0.04 mol) wurden bei 50° C in 100 ml deionisiertem Wasser gelöst. Die Lösung wurde anschließend innerhalb von 30 min. bei 50° C in eine gerührte (8000 rpm mittels Ultra-turrax T25) Lösung aus Kaliumcarbonat (34.8 g; 0.22 mol) in 300 ml Wasser getropft und 30 min. nachgerührt. Die Vorlage wurde durch eine Aluminiumfolie vor Licht geschützt. Die gelbe Suspension wurde über eine Filternutsche abgesaugt (Filtertyp: Whatman® Sorte 1, Porosität 11 µm, 88 g/m², Dicke 0.18 mm, Aschewert 0.06 %) und 2 mal mit Wasser bis auf einen Restnitratgehalt von kleiner 10 ppm gewaschen (200 ml Wasser/10 g Feststoff). Der Filterkuchen wurde nochmals in Ethanol aufgenommen und wiederum trockengesaugt. Der Filterkuchen wurde anschließend 40 min. bei 200° C im Muffelofen getrocknet (40 min.) und bei 350°C für 90 min. kalciniert. Die Prozeßkontrolle erfolgte hierbei mittels Thermogravimetrie. Es gab 3 Abbaustufen bei 155° C, 237° C und 350° C (Heizrate: 20° K/min). Man erhielt 30.1 g eines braunen Pulvers mit einem Silbergehalt von 39%.
Ag Partikelgröße via EDX: 100 nm ± 15 nm
ZnO Partikelgröße via EDX: < 20 µm
Partikelgrößenverteilung via Laser-Granulometrie: 2.8 µm (d₅₀-Wert)
BET Oberfläche [m²/g]: 19.5

Die Bestimmung der primären Partikelgröße erfolgt mittels energiedispersiver Röntgenspektroskopie (SEM/EDX); die Partikelgrößenverteilung wird durch Lasergranulometrie bestimmt (Mastersizer ex Malvern).

### Komponente E/1:

Standard Schnittglasfaser für Polyamide, Länge = 4,5 mm, Durchmesser = 10µm.

### Komponente E/2:

N,N'-Hexamethylen-bis-3,5-di-tert-butyl-4-hydroxyhydrocinnamid (Irganox® 1098)

### Komponente E/3:

Ca-stearat

Zum Nachweis der erfindungsmäß beschriebenen Verbesserungen der Phosphorstäbilität wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 270°C bei flachem Temperaturprofil gemischt, als Strang ausgetragen, bis zur Granulierfähigkeit abgekühlt und granuliert.

Die Prüfkörper für die in Tabelle 1 aufgeführten Untersuchung wurden auf einer Spritzgießmaschine des Typs Arburg 420C bei einer Massetemperatur von ca. 270°C und einer Werkzeugtemperatur von ca. 80°C verspritzt.

### Prüfung von Kunststoffteilen auf Phosphorausscheidung:

Ein Kunststoffstab (125 x 12.5 x 1.6 mm) wurde halbiert und je eine Hälfte in ein 10 ml Becherglas gegeben. Ein aus Silber bestehendes Kontaktmaterial (10 x 50 x 0.125 mm) wurde in ein kurzes Reagenzglas gelegt. Anschließend stellte man die drei Proben in eine 100 ml Schraubdeckelflasche gibt 5 ml Wasser hinzu und stellte das verschlossene System bei 70° C in einen Trockenschrank. Nach 28 Tagen wurde das Reagenzglas entnommen, mit Wasser aufgefüllt und der gesamte Inhalt in ein Becherglas gegeben. Man fügte 5 ml konz. Salzsäure hinzu und dampfte fast bis zur Trockne ein. Der Metallstab wurde nun entnommen, mit Wasser abgespült, der Rückstand mit 1 ml Schwefelsäure versetzt und nochmals fast bis zur Trocknung eingeengt. Dann wird mit 20 ml Wasser verdünnt, 4 ml 5 %ige Kaliumperoxodisulfat-Lösung zugesetzt und 30 Minuten erhitzt. Die Phosphorbestimmung erfolgte nun photometrisch als Molybdänblau in µg Phosphor / Kunststoffstab.

Die Zusammensetzungen der Formmassen und die Ergebnisse der Messungen sind der Tabelle zu entnehmen.

**Tabelle:**

| Komponenten [Gew.-%] | Vergleichsbeispiel | Erfindungsgemäßes Beispiel |
|---|---|---|
| A | 61.6 | 61.8 |
| B+D | 12 | 12 |
| E/1 | 25 | 25 |
| C/1 | 0.7 | - |
| C/2 | - | 0,5 |
| E/2 + E/3 (50:50) | 0.7 | 0,7 |
| Phosphorausscheidung nach 28 Tagen / 70°C in µg Phosphor/Stab | 150 | 19 |

## Patentansprüche

1. Thermoplastische Formmassen, enthaltend
A) 10 bis 99,8 Gew.-% eines thermoplastischen Polyamids,
B) 0,1 bis 60 Gew.-% roter Phosphor,
C) 0,05 bis 20 Gew.-% einer Stabilisatormischung C) aufgebaut aus, bezogen auf 100 % C),
C₁) 10,1 bis 99,9 Gew.-% elementares Ag und
C₂) 0,1 bis 89,9 Gew.-% ZnO,
D) 0 bis 40 Gew.-% eines Schlagzähmodifiers,
E) 0 bis 60 Gew.-% weiterer Zusatzstoffe,
wobei die Summe der Gewichtsprozente A) bis E) 100 % ergibt.

2. Thermoplastische Formmassen nach Anspruch 1, enthaltend
A) 20 bis 98 Gew.-%
B) 0,5 bis 40 Gew.-%
C) 0,05 bis 20 Gew.-%
D) 1 bis 30 Gew.-%
E) 0 bis 50 Gew.-%

3. Thermoplastische Formmassen nach den Ansprüchen 1 oder 2, in denen die Komponente C₁) eine primäre Partikelgröße gemäß SEM (Scanning Electron Microscope) von 10 bis 200 nm aufweist.

4. Thermoplastische Formmassen nach den Ansprüchen 1 bis 3, in denen die Komponente C₂) eine primäre Partikelgröße gemäß SEM von 0,1 bis 50 µm aufweist.

5. Thermoplastische Formmassen nach den Ansprüchen 1 bis 4, in denen die Stabilisatormischung C) eine Partikelgrößenverteilung gemäß Laser Granulometrie von 0,1 bis 50 µm aufweist.

6. Thermoplastische Formmassen nach den Ansprüchen 1 bis 5, in denen die Komponente C) eine BET Oberfläche von 10 bis 80 m²/g aufweist gemäß ISO 9277 unter Stickstoff.

7. Thermoplastische Formmassen nach den Ansprüchen 1 bis 6, in denen die Komponente D) aus einem Ethylencopolymer aufgebaut ist, welches 0,1 bis 20 Gew.-% funktioneller Monomere enthält.

8. Thermoplastische Formmassen nach den Ansprüchen 1 bis 7, wobei die Komponente D) funktionelle Monomere enthält, ausgewählt aus der Gruppe der Carbonsäure-, Carboxylanhydrid-, Carbonsäureamid-, Carbonsäureimid-, Amino-, Hydroxyl-, Epoxid-, Urethan- oder Oxazolingruppen oder deren Mischungen.

9. Verwendung der thermoplastischen Formmassen gemäß den Ansprüchen 1 bis 8 zur Herstellung von Fasern, Folien und Formkörpem.

10. Fasern, Folien und Formkörper erhältlich aus den thermoplastischen Formmassen gemäß den Ansprüchen 1 bis 8.

## Claims

1. A thermoplastic molding composition comprising
A) from 10 to 99.8% by weight of a thermoplastic polyamide,
B) from 0.1 to 60% by weight of red phosphorus,
C) from 0.05 to 20% by weight of a stabilizer mixture C) composed of, based on 100% of C),
C₁) from 10.1 to 99.9% by weight of elemental Ag and
C₂) from 0.1 to 89.9% by weight of ZnO,
D) from 0 to 40% by weight of an impact modifier, and
E) from 0 to 60% by weight of further additives,
where the sum of the percentages by weight of A) to E) is 100%.

2. The thermoplastic molding composition according to claim 1, comprising
A) from 20 to 98% by weight
B) from 0.5 to 40% by weight
C) from 0.05 to 20% by weight
D) from 1 to 30% by weight
E) from 0 to 50% by weight.

3. The thermoplastic molding composition according to claim 1 or 2, in which the primary particle size of component C₁) measured by SEM (scanning electron microscope) is from 10 to 200 nm.

4. The thermoplastic molding composition according to claims 1 to 3, in which the primary particle size of component C₂) measured by SEM is from 0.1 to 50 µm.

5. The thermoplastic molding composition according to claims 1 to 4, in which the particle size distribution of the stabilizer mixture C) measured by laser granulometry is from 0.1 to 50 µm.

6. The thermoplastic molding composition according to claims 1 to 5, in which the BET surface area of component C) to ISO 9277 under nitrogen is from 10 to 80 m²/g.

7. The thermoplastic molding composition according to claims 1 to 6, in which component D) is composed of an ethylene copolymer which comprises from 0.1 to 20% by weight of functional monomers.

8. The thermoplastic molding composition according to claims 1 to 7, where component D) comprises functional monomers selected from the group of the carboxylic acid, anhydride, carboxamide, carboximide, amino, hydroxy, epoxy, urethane, and oxazoline groups, and mixtures of these.

9. The use of the thermoplastic molding compositions according to claims 1 to 8 for producing fibers, foils, and moldings.

10. A fiber, foil, or molding obtainable from the thermoplastic molding compositions according to claims 1 to 8.

## Revendications

1. Matières à mouler thermoplastiques, contenant
A) 10 à 99,8 % en poids d'un polyamide thermoplastique,
B) 0,1 à 60 % en poids de phosphore rouge,
C) 0,05 à 20 % en poids d'un mélange stabilisant C) constitué de, par rapport à 100 % de C),
C₁) 10,1 à 99,9 % en poids d'Ag élémentaire et
C₂) 0,1 à 89,9 % en poids de ZnO,
D) 0 à 40 % en poids d'un modificateur antichoc,
E) 0 à 60 % en poids d'autres additifs,
la somme des pour cent en poids de A) à E) étant égale à 100 %.

2. Matières à mouler thermoplastiques selon la revendication 1, contenant
A) 20 à 98 % en poids
B) 0,5 à 40 % en poids
C) 0,05 à 20 % en poids
D) 1 à 30 % en poids
E) 0 à 50 % en poids.

3. Matières à mouler thermoplastiques selon la revendication 1 ou 2, dans lesquelles le composant C₁) présente une taille de particule primaire selon SEM (Scanning Electron Microscope) de 10 à 200 nm.

4. Matières à mouler thermoplastiques selon les revendications 1 à 3, dans lesquelles le composant C₂) présente une taille de particule primaire selon SEM de 0,1 à 50 µm.

5. Matières à mouler thermoplastiques selon les revendications 1 à 4, dans lesquelles le mélange stabilisant C) présente une distribution de tailles de particules selon granulométrie laser de 0,1 à 50 µm.

6. Matières à mouler thermoplastiques selon les revendications 1 à 5, dans lesquelles le composant C) présente une surface BET de 10 à 80 m²/g selon ISO 9277 sous azote.

7. Matières à mouler thermoplastiques selon les revendications 1 à 6, dans lesquelles le composant D) est constitué d'un copolymère d'éthylène qui contient 0,1 à 20 % en poids de monomères fonctionnels.

8. Matières à mouler thermoplastiques selon les revendications 1 à 7, dans lesquelles le composant D) contient des monomères fonctionnels, choisis dans le groupe des groupes acide carboxylique, anhydride d'acide carboxylique, carboxamido, carboximido, amino, hydroxy, époxyde, uréthane ou oxazoline ou des mélanges de ceux-ci.

9. Utilisation des matières à mouler thermoplastiques selon les revendications 1 à 8, pour la production de fibres, films et corps moulés.

10. Fibres, films et corps moulés, pouvant être obtenus à partir des matières à mouler thermoplastiques selon les revendications 1 à 8.
